Europäisches Patentamt

(19) European Patent Office

Office européen des brevets

(11) Publication number: **0 047 747**
**B1**

## EUROPEAN PATENT SPECIFICATION

(12)

(45) Date of publication of patent specification: **15.05.85**

(21) Application number: **81900092.8**

(22) Date of filing: **16.12.80**

(86) International application number:
**PCT/SE80/00336**

(87) International publication number:
**WO 81/01702 25.06.81 Gazette 81/15**

(51) Int. Cl.⁴: **C 04 B 24/40, C 04 B 11/024, C 04 B 28/14**

(54) **PROCESS FOR PRODUCING PLASTER MORTARS AND PRODUCTS OBTAINED THEREFROM.**

(30) Priority: **17.12.79 SE 8008784**
**15.01.80 SE 8000314**

(43) Date of publication of application:
**24.03.82 Bulletin 82/12**

(45) Publication of the grant of the patent:
**15.05.85 Bulletin 85/20**

(84) Designated Contracting States:
**AT CH DE FR GB LI NL SE**

(56) References cited:
**DE-A-1 471 029**
**DE-B-2 318 494**
**FR-A-2 291 165**
**GB-A- 641 553**
**SE-B-7 613 507**
**US-A-3 190 762**
**US-A-3 382 083**
**US-A-3 455 710**

**Derwent's abstract No 80 492 B/44, Su 647 277, published 1977, September 15, Chuvash Univ.**

(73) Proprietor: **PÜHRINGER, Josef, Dr.**
**Björnkällevägen 35**
**S-183 64 Täby/Stockholm (SE)**

(72) Inventor: **PÜHRINGER, Josef, Dr.**
**Björnkällevägen 35**
**S-183 64 Täby/Stockholm (SE)**

(74) Representative: **Kinzebach, Werner, Dr. et al**
**Patentanwälte Reitstötter, Kinzebach und**
**Partner Postfach 780**
**D-8000 München 43 (DE)**

Courier Press, Leamington Spa, England.

## Description

The present invention refers to a process for the preparation of plaster mortars containing gypsum powder and to products obtained therefrom.

The principles for the preparation of dry and wet mortars and the starting and base materials necessary therefor to enable manufacture of plaster mortars and products prepared therefrom are previously known. A summary of said principles is found for example in E. Grundmann, Bautenschutz, Chemie und Technologie, Dresden 1970, Chapter 6.1 Gipsmörtel, pp. 36—47. Herein there is not only given the method for preparing raw and base materials but also the types of preparations and methods known for modifying the mortar and products prepared therefrom with regard to their properties and functions. Additives for modifying mortars are of different types, namely

— accelerators and retarders for the growth of strength
— thickeners
— curing agents
— hydrophobating agents
— aids for the manufacture of light and pore gypsum (blowing agent)
— dyes and pigments
— fillers and ballast
— flowing agents.

The mortar is used in more or less handicraft forms to supply surface layers or to make bodies for different purposes in regard to statically supporting or/and fire-retarding, acoustically suppressing or aesthetical function etc. Plaster mortars may be used also for the manufacture of products in a more or less large industrial scale, mainly blocks, plates and boards of varying dimensions. Mixtures of gypsum and water may be used as a mortar but also as a binder in other mortars, and the binder may optionally be combined with hydraulic binders or "puzzolanes". As ballast or reinforcement there are used fibres of different materials, hair and mineral fibres and organic fibre materials, either occurring in nature or synthetically manufactured. As a ballast there may be used inter alia conventional mortar sand of different grades.

Gypsum powder can inter alia be made by burning. Principally, there are two different ways of preparing gypsum, namely by burning at somewhat above 100°C, the major part of the water of hydration of the hydrated gypsum being released, and burning at a few hundred degrees, the major part of the water of crystallization leaving the base material of the gypsum manufacture. When adding water or as is conventional adding gypsum to water gypsum hydrate is reconstituted in the form of a network of fine crystalline needles. Adding water to the gypsum mortar has the same effect as added water to the cement mortar: The higher the water/gypsum number is the more inferior the properties of the hardened mortar.

In order to be able to shape building elements consisting of or containing said materials the mass in an initial stage of the manufacturing process must be fluid. This can be provided since the binder used in the preparation of such mortars, namely gypsum, lime and certain additives, such as calcium and magnesium oxides or hydroxides, cement, puzzolanes and minerals, require the presence of certain quantities of water to form salts and possibly the gels constituting the binder or a part of the binder phase in the final material. The binder reacts as such with water. Under particular conditions the binder can interact also with the ballast material, particularly if the ballast consists of or contains reactive silica. The reactive silica is present for example in shaft furnace slag, in filter dust, in silica-rich sand and filler materials, in fly ash etc. These silica-containing reactive fillers with puzzolane effects can supplement binders with up to 40—75%, in a preferred interval. 5—50%, particularly 10—20%.

The quantity of water required for the necessary reactions in hardening of the mortar is not enough to impart to the liquid wet mortar or the compositions of matter involved during the manufacturing process the necessary workability.

Therefore, water must be added to the wet mortar or the compositions of matter involved during the manufacturing process of the mortar in a quantity which sometimes is larger than that required for optimum salt formation and gel formation. This means that there is formed in the material a pore system since the excess of water has evaporated. The formation of this pore system has some negative effects for the properties of the material. One of these effects is the water uptake (capillary and hygroscopically). Another effect is the reduction of strength.

Now, it is an object of the invention to improve the properties of materials prepared from mineral binders, reactive or/and non-reactive ballast and water with conventional additives. Another dominating object of the invention is in general to find forms of use or new applications for gypsum.

The disadvantages of the prior art in general is the fact that adding hydrophobating agents results in uncontrolled air pore formation with concomittant degrees of strength and the fact that they require a longer mixing time.

These methods for hydrophobation and modification of plaster mortars and products prepared therefrom thus have certain drawbacks.

From Swedish lay-open print 76—13507—8 it is known to prepare emulsions consisting of alkyl alkoxysilanes, tensides/emulsifiers/surfactants, water and optionally alcohol. Such emulsions are according to said patent specification used in a process for imparting to the surface of final constructional element consisting of hardened mortar certain waterrepellance/hydrophobicity. Emulsions according to said patent specification can be made in different ways. As an active hydrophobating agent there is used alkyl alkoxysilanes and condensation and hydrolysis products obtained therefrom with a criterion that they shall be soluble in lower alcohols, such as methanol, ethanol and propanol.

US—A—3 455 710 describes a process for producing water resistant articles from gypsum materials which are rended waterrepellant by incorporating into the gypsum material an aqueous emulsion of an organo hydrogen polysiloxane.

It is now been surprisingly found that emulsions prepared according to the Swedish lay-open print mentioned above cannot only be used for hydrophobating the surface of already hardened mortars but may also be used as additives during one stage or some stages in the process for preparing the mortar.

It has been surprisingly found that it is possible to add said emulsions or above all to provide said emulsions directly in the mortar at some stage during the process for its manufacture thereby to give the mortar hydrophobic properties at the same time as reduction of strength due to the addition of surfactants is reduced or avoided or even that improvement of strength can be provided.

In said lay-open print 76—13507—8 there are described silanes and/or their condensation products and/or hydrolysis products, preferably alkyltrialkoxy silanes and their condensation products with 0—2 alkoxy groups per silicon atom. According to a variant of said process the alkoxy residue of the silane may be constituted by a methoxy or ethoxy residue and the alkyl residue of the alkyl alkoxysilane can have 1—6 carbon atoms. It has now been found according to the invention that the positive effects of the admixture of the silane with the mortar according to the invention are not limited to such alkyltrialkoxysilanes and their condensation products but are obtained also with other alkoxysilanes, such as for example alkyl alkoxysilanes in general and in a similar manner phenyl alkoxysilanes.

Also phenyl alkoxysilanes having 2—3 alkoxy groups in the monomeric silane or 0—2 alkoxy groups in the oligomeric alcohol-soluble condensation product can thus be used according to the invention. According to the invention alkyl alkoxysilanes, phenyl alkoxysilanes and tetraalkoxysilanes and/or their condensation products and/or their hydrolysates are added to the mortar at some stage during the process for its manufacture. One criterion for the use of silicon-organic compounds according to the invention is that they are soluble in alcohol, i.e. contain a limited number of silicon atoms, preferably less than 10 — i.e. their molecules are preferably oligomeric or monomeric.

A measure for the suitability of the active preparations of being emulsified in water or a water-containing material is their solubility or compatibility with at least lower (monovalent) alcohols having up to 6 C-atoms, primarily their solubility in alcohols between methanol and propanol, inclusive (or water). This compatibility with alcohol (or water or alcohol-water mixture) does not delimit the choice of conceivable solvents for the silane or polysiloxane products (alkoxy polysiloxanes) used in the invention. If said products meet the criterion that they are soluble in lower alcohols they can according to the invention suitably be used for direct emulsifying in water or direct to the wet mortar or admixed with the dry mortar and its constituents, optionally while adding tensides/surfactants/emulsifiers at some stage of the process for preparing the wet mortar. Such products may also and optionally in the presence of catalysts be admixed and emulsified after they have (optionally together with tensides/surfactants/emulsifiers according to the invention) been dissolved in solvents of various types. As such solvents there may be used not only monovalent alcohols but also two- and three-valent lower alcohols and aromatic solvents. Typical examples of the latter type of solvents of hydrocarbon type are inter alia toluol, xylol, etc.

The mixture of silanes or siloxanes, tensides and catalysts according to the invention with aliphatic or aromatic solvents can be used to impart to the respective preparations easier handling during manufacture, for example in disposing and use, such as viscosity changes, density changes, storage stability, avoidance of risk for unvoluntary contact with water etc.

The reactions taking place in the presence of gypsum and so-called ballast or filler materials containing or consisting of reactive silica and interactions between said ballast and filler materials are known as to result (but not as to cause). Such "gypsum, silica reactions" take place inter alia in the preparation of gypsum products between gypsum and in the presence of slaked and/or unslaked lime, Portland cement (granulated) shaft furnace slag, filler, dust, fly ash and similar products and, as indicated, ballast and filler materials containing or consisting of silica.

It has been found that it is possible to provide a binding corresponding to the binding arising in said reactions by admixing with the wet or dry mortar during some stage of its process of manufacture finely divided reactive silica. Thus, it has been surprisingly found that admixture of reactive silica according to the invention can take place by dispersing tetraalkoxy silanes, so-called silica esters, in monomer or oligomer form and optionally their hydrolysates to the mortar at some stage of the process for its manufacture. The admixing can take place in the same manner and if required with the same tenside/surfactant/emulsifiers and optionally catalyst as described above. The addition of silica esters (tetraalkoxysilanes) and/or their condensation products and/or their hydrolysate products can take place separately or in admixture with alkyl, phenyl, alkylphenyl alkoxy silanes or alkoxy siloxanes and in other respects according to the process of the invention.

The silicon-organic compounds which according to the invention may be used for hydrophobation of hardened masses prepared from wet mortar are alkyl and/or phenyl and/or alkylphenyl alkoxy silanes and their condensation and hydrolysis products. The condensation products used according to the invention are preferably so-called oligomeric silanes using an old term or using a new term called oligomeric (alkoxy) poly-siloxanes.

The length of the alkyl groups and the size of the phenyl groups and the length of the alkoxy groups, i.e. the number of C-atoms contained therein, vary in view of the requirement that silica-organic compounds shall be soluble in lower alcohol and is relatively limited. The alkyl groups may contain up to 35 carbon atoms, but a number of carbon atoms less than 20, preferably less than or equal to 10 should be used.

From economic reasons of production the upper limit for the number of carbon atoms in the alkoxy group is five, a preferred number being two or/and three. The silica esters (tetraalkoxy silanes) used in monomeric or oligomeric form contain less than 10 silicon atoms. In such silica esters the alkoxy residue shall be an ethoxy residue or longer, i.e. contain equally to or more than two carbon atoms, from environmental reasons. When using methoxy residues precautionary steps should be taken (closed process) for environmental reasons.

Modification of hardened mortars made according to the invention takes place by adding to the mortar at some stage during the process for its manufacture silicon-organic preparations of a particular type consisting of or prepared from tetraalkoxy silanes together with or in the presence of tenside/emulsifier/surfactants (and optionally catalysts). In order to disperse such active silicon-organic preparations, optionally in solvents, according to the invention into water or water-containing mortars or water-containing mixtures of materials or the dry constituents of the mortar tensides may be used. As tensides/emulsifiers/surfactants according to the invention there may be used anionic and non-ionic tensides, preferably non-ionic tensides. Among the non-ionic tensides there are used preferably tensides which are compatible with or soluble in lower alcohols and in active silane or siloxane preparations according to the invention.

Examples of anionic tensides which are conceivable are the following: Sulphonated and sulphurated esters, amines and polyethers, sulphonated and sulphurated fats, oils and fatty acids. Reaction products between fatty acids and binary, tertiary, quaternary organic amines and, of course, soap etc. Examples of preferred non-ionic substances suitable as emulsifiers are alcohol-alkylene oxide adducts and esters.

Particularly preferred surfactants are the following: Sorbitane fatty esters, polyoxyethylene sorbitane fatty esters, polyoxyethylene fatty esters and polyoxyethylene fatty alcohol ethers and polyoxyethylene adducts.

Conventional names for such preparations are inter alia polyoxyethylene stearate, sorbitane monooleate, sorbitane mono palmitate, sorbitane monostearate, sorbitane tristearate, sorbitane monooleate, sorbitane trioleate, polyoxy-ethoxysorbitane monooleate, monopalmitate, monostearate, -tristearate, -monooleate, -trioleate etc.

Among the tensides useful for the purpose of this invention such tensides can be used which loose their surface-active properties — they shall be capable of decomposition — at some stage during the process of manufacture, but at the latest before taking into use the building product prepared from wet mortar so that the effect of surfactant does not reduce the desired effect of the active hydrophobating/modifying prepara-tion. The surface-active tensides may loose their surface-active properties from one or some of the following reasons:

Alkaline or acid substances, oxidation or reduction agents, heat or radiation.

A preferred method for decomposing tensides is to allow them according to the invention to decompose by the alkalinity of the building material or the heat used under the process of manufacture. If there is used according to the invention non-alkali resistant, preferably non-ionic substances as emulsifiers one can obtain the advantage that the emulsion is degraded already during the state of manufacture of mortar containing hydraulic binders, said stage in accordance with known technique being determined by the quantity of surfactant additive so that the local concentration of the active preparations according to the invention is not carried to a higher degree than desirable.

In view of the fact that in principle hydrophilic as well as hydrophobic groups are bound to the silicon atom in the silicon-organic compounds according to the invention, tensides may be used which are soluble in oil and tensides may be used which are soluble or emulsifiable in water. It has been found that a mixture of such types of tensides sometimes give the best result. It has been found that mixtures between 10/90% and 90/10% can give better results than the addition of individual types of tensides.

One purpose of the invention is — if desired — to provide prepolymerized or polymerized particles, which as to function are similar to powder, in one single process in connection with the manufacture of the wet mortar. This is according to the invention done by using a type of catalyst, i.e. substances promoting condensation and polymerization of alkoxysilanes to polysiloxanes (in the presence of moist or water). Such substances are known from the art of preparing silicon products of alkoxysilanes.

Examples of catalysts useful according to the invention are as follows:

Catalysts for use in the process according to the invention can consist of (silan(ol)polymerization)-catalysts and (silan(ol)condensation) catalysts which in most cases also are hydrolysis catalysts, in accordance with known technique, above all catalysts which hydrolyze, polymerize and condensate silanes/silanols, siloxanes and silicons. Some alkoxy silanes are hydrolyzing themselves.

Other alkoxy silanes are hydrolyzed at acid or alkaline reaction conditions. Examples of such catalysts are given in the following:

A first group consists of catalysts, for example according to Swedish patent No. 381 453, which are either organofunctional silanes with basic organogroups and/or alcoholates of silicon and/or of metals from the first and/or the second main group and/or fourth and/or fifth side group in the periodic system. These catalysts are hydrolyzable.

Another group of catalysts to provide and accelerate silane and silanol condensation and possibly polymerization with substrates is described in U.S. patent No. 3 328 481, namely organic amines with a preferred constant of dissociation of at least $10^{-10}$, preferably primary, secondary and tertiary amines.

Another group of useful catalysts for the process of the invention is also given from U.S. patent specification 3 328 481 and are known from another context, i.e. silicon manufacture as condensation products between aliphatic aldehydes and aliphatic primary amines.

Another conceivable and important group of catalysts for the process according to the invention are metal salts of carboxylic acids and polycarboxylic acids and hydroxycarboxylic acids. The metals in this instance are inter alia lead, tin, nickel cobalt, iron, cadmium, chromium, zinc, copper, manganese, aluminium, magnesium, barium, strontium, calcium, cesium, sodium, potassium, lithium, titanium and zirconium and vanadium. Some specific examples of such types of catalysts are given for example in Swiss patent specification CH 594 576 using the same catalysts but in another connection than in the process of the invention, namely in the preparation of a particular binder.

Another type of silanopolymerization catalysts are metal oxides.

Yet another agent to provide silane and silanol-polymerization and optional coupling of silan(ol)s to the OH-groups of the substrate in the mortar are chelate complexes. A particular type of chelate complexes used in the preparation of silicons is obtained by reaction of metal alcoholates and chelates, a process which is described in principle in Belgian patent B 564 179. The chelate complex is obtained according to the principles illustrated in said patent specification are prepared from metal acid esters, the chelates being beta diketones, betaketone esters, beta hydroxy or betaamino ketones and similar substances. Further examples of chelates are given in U.S. patent specification 3 153 000.

Yet another group are organic peroxides. Such catalysts are quite flexibly useful. They can be admixed with or dissolved in either water and/or alcohols and/or conventional organic solvents and/or mixtures thereof. Some catalysts may even be evaporized and transported in gas form. Certain catalysts, for example from the classes naphthenates and octoates, are silicon- and silanesoluble.

The catalysts suitable for the process of the invention can be selected from the above groups (singly or in combinations, simultaneously or in sequence), the choice being taken while considering requirements and desiderata, such as way of transportation, technique for application, properties of material and way of functioning etc. Thus, for example catalysts prepared from metal alcoholates and chelates may either be prepared before the application or they can be formed in situ in that the individual components are introduced separately, possibly together with other components in the preparations in the process of the invention.

In the process according to the invention combinations or alkoxysilanes and different combinations of catalysts not specified above but in accordance with known technique, used for polymerization and condensation of polymers, may be used.

In order that the reactions required to provide for treatment of the substrate according to the process of the invention shall be initiated, take place or be terminated presence of water is required to provide for hydrolysis of the hydrolyzable components present in the treating agent or agents. Such water can be found in the substrate or may be supplied to the substrate by methods known per se. The mortar may, however, also be present in the components for the preparation of the respective hydrolysates or in the transport medium, and water is, of course, also present as mixing-, processor reaction water in the manufacture of mortar masses in gas or liquid form or when cooling is required in the form of ice.

As catalysts there may be used catalysts used within silicon technology to prepare polymers from alkoxy silanes. Preferred catalysts are those soluble in alkoxy silanes or/and lower alcohols. Catalysts can function also as tensides/emulsifiers/surfactants or vice versa. The supply of such catalysts can take place together with the alkoxysilane or solutions thereof, catalysts being admixed with or dissolved or dispersed in the silane, optionally together with alcohol and surfactant according to the invention.

The catalyst may also be added in some form to parts of the wet or dry mortar during the process of preparing the wet mortar. The catalyst can be added to all mixtures or mixture variations of the effective preparations according to the invention, namely alkoxy silane, tenside/surfactant/emulsifier, alcohol or alcohol and water mixture or each separately.

The catalysts can be soluble in alcohols and can then be added to, admixed with or dissolved in silanes. Also solutions of catalysts in conventional solvents of aromatic or aliphatic type can be used to admix catalysts with the silane or with the mortar. Catalysts can also dispersed in silanes. Also in admixing catalysts with silanes and tensides the techniques for admixing with the dry or wet mortar as described early can be used. In particular, the process of adding emulsions or dispersions and suspensions of alkoxy silanes, their condensation products and their hydrolysis products to the dry or wet mortar can be supplemented according to the invention by adding catalysts to said mixtures, preferably to the alkoxy silane before admixing into the continuous phase. In such a manner a so-called precondensation or prepolymerization of the alkoxy silane will be provided already before admixing the dispersion into the mortar, the time for forming polymers in the wet mortar decreasing.

According to the invention special silanes and (oligomeric) polysiloxanes may be added to the mortar at some stage during its process of manufacture. Silane emulsions (containing also tensides and optionally catalysts) may be added to the ballast or parts thereof. They can be added to the mixing water. They can be added to the binder (for example if the binder is activated before admixture with the mortar). They can be added to the dry mortar as a whole or to parts thereof or a particular pulverulent carrier substance. They can also be added to the wet mortar. In addition to being dissolved in a lower alcohol silicon-organic compounds according to the invention and/or tensides/surfactants/emulsifiers or catalysts, may be dissolved also in solvents in accordance with conventional technique of the type hydrocarbon oils, which in some cases also in a conventional manner can function as additives, such as for example foam stabilizers.

Particles of active substances according to the invention may also be provided with the quantities of water required to prepare the wet mortar either as a whole or parts thereof. Also in this case some methods are preferred in accordance with the invention. Binder/ballast or parts thereof can be mixed with silicon-organic compounds and/or surfactants and/or catalysts or solvents. Such surface-active preparations according to the invention can be added also to the water/mineral grain mixtures used in the preparation of gypsum products (full process water or parts thereof act as a continuous phase in a dispersion).

Active preparations can be mixed with blowing agents, such preparations and conventional additives being used as carrier substances in mixing. Active preparations according to the invention may also be added to the wet mortar in some stage of its manufacture. The quantities of active preparations used (silicon-organic compound and tenside) can be added in mixture or separately at different stages during the process of manufacture of a wet mortar from the preparation of the ballast material (optionally including grinding and wetpainting) until the mortar has been given the form and the pore volume which is a requisite for desired properties and function of a hardened mortar.

As earlier indicated silanes and poly siloxanes, tensides and catalysts can be added according to the invention to the wet mortar directly either together or individually. According to the invention parts of the mortar can optionally be treated with alkoxy silanes and other parts of surfactant before the respective parts are admixed (and other parts with the catalyst).

A special way of providing emulsions or silanes, mainly alkoxy silanes or their hydrolysis and condensation products, according to the invention is the following: Parts of the constituents of the dry mortar, being either fractions or parts of the ballast, of the binder or a particular pulverulent fine-grained carrier substance, are treated on their surfaces with alkoxy silanes, surfactant, such as emulsifier; (and alcohol), catalysts or mixtures thereof.

Plaster mortars and gypsum products as such are not silanol-reactive. In order that the silane shall hydrolyze and condensate sometimes acid or alkaline reaction conditions or/and presence of catalysts will be required.

In case alkaline mixing conditions are to be obtained for hydrolysis and polymerization of silanes and silica esters and other esters, such can be provided by adding for example alcoholates of alkaline earth or alkali metals in the form of powder or a solution to the dry powder. Such alcoholates hydrolyze after contact with the mixing water and provide hereby alkaline reaction conditions for polymerization and other reactions. Alkaline and acid reaction conditions in mixtures containing water can, of course, be provided in many other ways. Alkaline mixing conditions are obtained for example by adding slaked or unslaked lime, cement, granulated shaft furnace slag to the dry mortar, the wet mortar or their constituents or by using certain catalysts according to the invention.

The addition of active preparations (silanes, tensides, catalysts) of individual substances or mixtures thereof takes place in the form of concentrates, solutions or emulsions in a liquid form, solid form or suspensions or in the form of gases or aerosols. As preferred solvents there may be used lower alcohols or other polar solvents. As a transport medium for aerosols there may be used water vapour or air or mixtures thereof. As an emulsifier (continuous phase) for the addition of emulsions or suspensions there may be used water or alcohols or mixtures thereof.

The addition of alkoxy silanes to mortars should be less than 5% and more than 0.1% of the dry weight of the binder, preferably within the range of 0.5—3%. The surfactant/emulsifier additive constitutes $0.1^0/_{00}$—10% of the silane weight, preferably within the range $1^0/_{00}$—10%. Silane or the silane/surfactant mixture can contain alcohol compatible with water, preferably lower alcohol, such as methanol, ethanol (preferably) and propanol, or non-water soluble aliphatic and aromatic solvents between 0 and 200% of the silane weight (siloxane weight), preferably within the range 10—50%.

Moreover, it has been found that reduced addition of surfactant also can give certain positive effects: The size of the drops in the preparation during mixing increases, which is in effect that technically can be utilized if distribution of the modifying effect is desirable, for example with regard to the strength of the material, particularly when the preparations are admixed into the dry or wet mortar in the form of aerosols, optionally prepared by mechanical atomization by spraying.

Catalyst additives used in accordance with the invention are delimited to 10% of the weight of the silane for economical reasons with a lowermost limit of technical reasons of $0.1^0/_{00}$. The preferred range is between $1^0/_{00}$ and 5% of the weight of the silane.

As an additive for improving the properties and functions of gypsum powder, plaster mortars and products therefrom one can use inter alia fine particles of organic monomers or polymers in the process of manufacture. Common to all these additives according to the invention is that if they are added in the form of particles their particle size for the major part in regard to their quantity should be less than 1 μm, preferably of the order of 0.5 μm and 0.1 μm.

The process according to the invention can be used for manufacture of building elements and building components of various types, such as ordinary and finishing mortars, concrete, light ballast concrete, clinker concrete, light concrete, sandstone products and the like.

The measures of adding fine powders of silica particles of organic polymers and additives of alkoxy silanes result inter alia in the following advantages:

— lower water-gypsum number
— lower drying energy
— better flowability of pulverulent materials
— better admixability with water
— hydrophobic characteristics during the life of the mortar
— higher strength.

## Claims

1. A process for the preparation of a plaster mortar containing gypsum powder, water, conventional additives and ballast material and optionally a fine filler material consisting of or containing as a dominating constituent reactive silica and constituting at most 50 per cent, preferably at most 25 per cent, of the weight of the gypsum powder, characterized by adding to said materials, parts or mixtures thereof during the process of manufacture in the preparation of the gypsum powder, in the mixing of the powder and water or to the mixing water or to the wet mortar,

(a) a tetraalkoxysilane or a condensation product or hydrolysis product thereof, together with an alkylakoxysilane, a phenylalkoxysilane or a condensation product thereof having 0—2 alkoxy groups per silicon atom, and

(b) optionally a tenside/emulsifier/surfactant,
(c) optionally a solvent,
(d) optionally a "silanol" polymerization/condensation catalyst and
(e) optionally substances providing for acid or basic reaction conditions in the mixing water,

the silane being added to an amount of between 0.1 and 5 per cent, preferably between 0.5 and 3 per cent by weight, based on the weight of the gypsum powder.

2. A process according to claim 1, characterized by adding the silanes in the form of concentrates, solutions, emulsions or suspensions or in gas form or aerosol form as monomers or oligomers.

3. A process according to claim 1 or 2, characterized in that the substances to provide for basic reaction conditions in the wet mortar are lime or alcoholates of alkali or alkaline earth metals.

4. A process according to any preceding claim, characterized in that the surfactant/emulsifier/tenside constitutes $0.1^0/_{00}$ to 10% preferably between $1^0/_{00}$ and 5% by weight, based on the weight of silane.

5. A process according to any preceding claim, characterized in that the catalyst added constitutes $0.1^0/_{00}$ to 10%, preferably between $1^0/_{00}$ and 1%, of the weight of silane.

6. A process according to any preceding claim, characterized in that the solvent added, preferably a lower alcohol, constitutes between 0 and 200% of the weight of silane (weight of siloxane), preferably within the range 10—50%.

7. Products prepared by the process of any preceding claim.

## Patentansprüche

1. Verfahren zur Herstellung von Gipsmörtel, der Gipspulver, Wasser, übliche Additive und Balastmaterial und gewünschtenfalls einen feinen Füllstoff, der aus reaktivem Siliciumdioxid besteht oder reaktives Siliciumdioxid als Hauptbestandteil enthält und höchstens 50 %, vorzugsweise höchstens 25 % des Gewichts des Gipspulvers ausmacht, dadurch gekennzeichnet, daß man zu den genannten Materialien, Teilen oder Mischungen davon während des Herstellungsverfahrens, bei der Herstellung des Gipspulvers, dem Vermischen von Pulver und Wasser oder zu dem Anmachwasser oder zu dem nassen Mörtel

a) ein Tetraalkoxysilan oder ein Kondensationsprodukt oder ein Hydrolyseprodukt davon, zusammen mit einem Alkylalkoxysilan, einem Phenylalkoxysilon oder einem Kondensationsprodukt davon mit 0 bis 2 Alkoxygruppen pro Siliciumatom, und

b) gewünschtenfalls, ein Tensid/Emulgator/grenzflächenaktives Mittel,

c) gewünschtenfalls ein Lösungsmittel,

d) gewünschtentalls einen "Silanol" Polymerisations-/Kondensationskatalysator und

e) gewünschtenfalls Substanzen, die im Anmachwasser saure oder basische Reaktionsbedingungen herbeiführen, zugibt,

wobei man das Silan in einer Menge von 0,1 bis 5 %, vorzugsweise von 0,5 bis 3 Gew.-%, bezogen auf Gewicht des Gipspulvers, zugibt.

2. Verfahren nach Anspruch 1, dadurch gekennzeichnet, daß man die Silane als Konzentrate, Lösungen, Emulsionen oder Suspensionen oder als Gas oder Aerosol als Monomere oder Oligomere zugibt.

3. Verfahren nach Anspruch 1 oder 2, dadurch gekennzeichnet, daß es sich bei den Substanzen, die in dem nassen Mörtel basische Reaktionsbedingungen herbeiführen, um Kalk oder Alkalioder Erdalkalimetallalkoholate handelt.

4. Verfahren nach einem der vorhergehenden Ansprüche, dadurch gekennzeichnet, daß das grenzflächenaktive Mittel/der Emulgator/das Tensid 0,1 $^o/_{oo}$ bis 10 %, vorzugsweise 1 $^o/_{oo}$ bis 5 Gew.-%, bezogen auf das Silangewicht, ausmacht.

5. Verfahren nach einem der vorhergehenden Ansprüche, dadurch gekennzeichnet, daß der zugegebene Katalysator 0,1 $^o/_{oo}$ bis 10 %, vorzugsweise 1 $^o/_{oo}$ bis 1 % des Silangewichts ausmacht.

6. Verfahren nach einem der vorhergehenden Ansprüche, dadurch gekennzeichnet, daß das zugegebene Lösungsmittel, vorzugsweise ein Niedrigalkohol, 0 bis 200 % des Silangewichts (Siloxangewichts), vorzugsweise 10 bis 50 %, ausmacht.

7. Produkte, die nach dem Verfahren einer der vorhergehenden Ansprüche hergestellt wurden.

**Revendications**

1. Procédé de préparation d'un mortier de plâtre contenant de la poudre de gypse, de l'eau, des additifs classiques et une matière de lest, et optionnellement une fine matière charge se composant de ou contenant, en tant que constituant dominant, de la silice réactive et constituant au plus 50 %, de préférence au plus 25 %, du poids de la poudre de gypse, caractérisé par le fait qu'on ajoute auxdites matières, à des parties ou à des mélanges de celles-ci, au cours du procédé de fabrication dans la préparation de la poudre de gypse, dans le mélangeage de la poudre et de l'eau, ou à l'eau de mélangeage ou au mortier humide:

a) un tétraalcoxysilane ou un produit de condensation ou un produit d'hydrolyse de celui-ci,

ainsi qu'un alkylcoxysilane, un phénylalcoxysilane ou un produit de condensation de ceux-ci ayant de 0 à 2 groupements alcoxy par atome de silicium, et

b) à titre optionnel, un agent tensionactif-émulgateur-surfactif,

c) à titre optionnel, un solvant,

d) à titre optionnel, un catalyseur de polymérisation/condensation des "silanols", et

e) à titre optionnel, des substances créant des conditions de réaction acides ou basiques dans l'eau de mélangeage,

le silane étant ajouté en une quantité comprise entre 0,1 et 5 %, de préférence entre 0,5 et 3 % en poids, par rapport au poids de la poudre de gypse.

2. Procédé selon la revendication 1, caractérisé par le fait qu'on ajoute les silanes sous la forme de concentrés, de solutions, d'émulsions, ou de suspensions, ou bien sous forme de gaz ou sous forme d'aérosols, en tant que monomères ou oligomères.

3. Procédé selon la revendication 1 ou 2, caractérisé par le fait que les substances qui créent les conditions de réaction basiques dans le mortier humide sont la chaux ou des alcoolates de métaux alcalins ou alcalinoterreux.

4. Procédé selon l'une des revendications précédentes, caractérisé par le fait que le surfactif-émulgateur-agent tensioactif constitue de 0,1 $^o/_{oo}$ à 10 %, de préférence de 1 $^o/_{oo}$ à 5 % en poids, par rapport au poids du silane.

5. Procédé selon l'une des revendications précédentes, caractérisé par le fait que le catalyseur ajouté constitue de 0,1 $^o/_{oo}$ à 10 %, de préférence de 1 $^o/_{oo}$ à 1 %, du poids du silane.

6. Procédé selon l'une des revendications précédentes, caractérisé par le fait que le solvant ajouté, de préférence un alcool inférieur, constitue entre 0 et 200 % du poids du silane (poids du siloxane), de préférence dans la plage de 10 à 50 %.

7. Produits préparés par le procédé de l'une des revendications précédentes.